# EUROPÄISCHE PATENTSCHRIFT

(11) **EP 1 242 270 B1**
(45) Veröffentlichungstag und Bekanntmachung des Hinweises auf die Patenterteilung: **14.02.2007**
(21) Anmeldenummer: 01988668.8
(22) Anmeldetag: 22.09.2001
(51) Int. Cl.: B60S 1/32

(54) **WISCHARM**
WIPER ARM
BRAS D'ESSUIE-GLACE

(30) Priorität: 24.10.2000 DE 10052616
(43) Veröffentlichungstag der Anmeldung: 25.09.2002
(73) Patentinhaber: ROBERT BOSCH GMBH, 70442 Stuttgart (DE)
(72) Erfinder: WEILER, Michael, 76131 Karlsruhe (DE)
(74) Vertreter: Gleiss & Grosse
(86) Internationale Anmeldenummer: PCT/DE2001/003671
(87) Internationale Veröffentlichungsnummer: WO 2002/034588

(56) Entgegenhaltungen:
- EP-A- 0 299 708
- US-A- 3 480 986

## Beschreibung

Die vorliegende Erfindung betrifft einen Wischarm für eine Wischvorrichtung, insbesondere für eine Wischvorrichtung für eine Fahrzeugscheibe, der einen blattfederartig ausgebildeten Abschnitt mit einem Abklappmechanismus aufweist, mit dem der Wischarm zwischen einer Ruhestellung und einer Abklappstellung über eine instabile Zwischenstellung hin- und herbewegbar ist.

### Stand der Technik

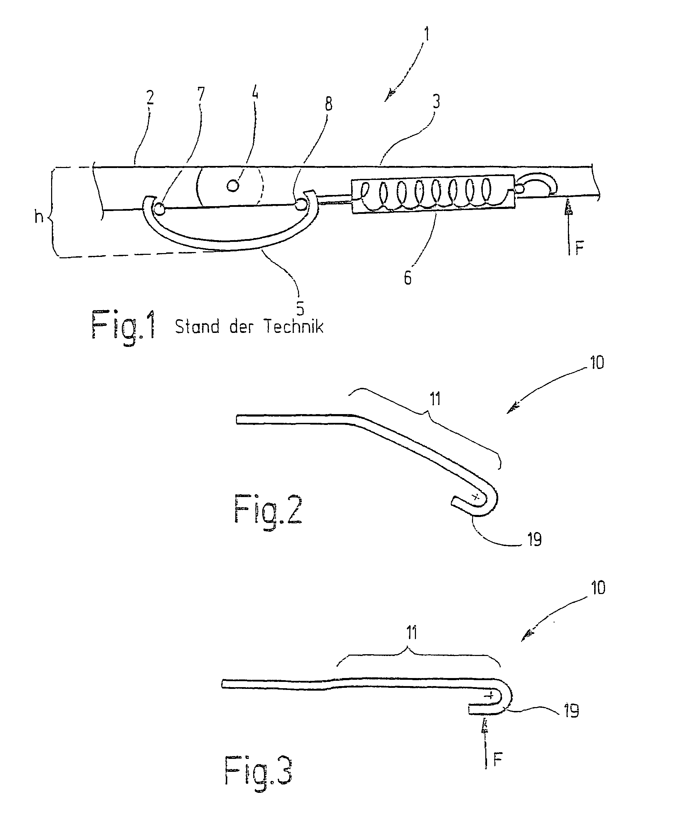

Figur 1 zeigt einen bekannten Wischarm, der insgesamt mit dem Bezugszeichen 1 versehen ist. Der dargestellte Wischarm 1 weist einen ersten Armabschnitt 2 auf, der gelenkig mit einem zweiten Armabschnitt 3 verbunden ist. Die gelenkige Verbindung des ersten Armabschnitts 2 und des zweiten Armabschnitts 3 erfolgt dabei über einen Stift 4, der durch miteinander ausgerichtete Öffnungen in dem ersten Armabschnitt 2 und dem zweiten Armabschnitt 3 geführt ist. Der Stift 4 bildet dabei die Drehachse. Um ein nicht dargestelltes Wischblatt mit einem ausreichenden Druck gegen eine zu wischende Scheibe anzulegen, wirkt zwischen dem ersten Armabschnitt 2 und dem zweiten Armabschnitt 3 eine Feder 6 derart, dass ein an dem ersten Armabschnitt 2 vorgesehener Punkt 7 und ein an dem zweiten Armabschnitt 3 vorgesehener Punkt 8 aufeinander zu vorgespannt werden. Die über die zu wischende Scheibe (und das nicht dargestellte Wischblatt) auf den Wischarm ausgeübte Kraft ist mit F bezeichnet, wobei sich der in Figur 1 dargestellte Wischarm im Kräftegleichgewicht befindet. Beispielsweise um das Wischblatt zu wechseln kann der Wischarm 1 in bekannter Weise in eine Abklappstellung gebracht werden. Die Punkte 7, 8 und der Stift 4 verändern ihre Lage dann derart, dass der Stift 4 die untere Spitze eines die Punkte 7, 8 und den Stift 4 verbindenden Dreiecks bildet, nachdem der Wischarm über eine instabile Zwischenstellung hinweggeführt wurde, in der die Punkte 7, 8 und der Stift 4 auf einer Geraden liegen. Um eine derartige Bewegung ausführen zu können ist der Endabschnitt 5 der Feder 6 gebogen ausgeführt, wie dies in Figur 1 dargestellt ist. Ein Nachteil der bekannten Wischarme besteht darin, dass er eine relativ hohe Bauhöhe h aufweisen, was beispielsweise den Luftwiderstand vergrößert und auch in ästhetischer Hinsicht häufig als störend empfunden wird.

Die EP-A-0 299 708 zeigt einen Wischarm für eine Wischvorrichtung einer Fahrzeugscheibe, der einen federartig ausgebildeten Abschnitt mit einem Abklappmechanismus aufweist, mit dem der Wischarm zwischen einer Ruhestellung und einer Abklappstellung über eine instabile Zwischenstellung hin- und herbewegbar ist. Der Abklappmechanismus wird von dem Abschnitt des Wischarms gebildet, der sich in zwei gegeneinander vorgespannte Schenkel aufteilt, die sich beim Anheben des Wischarms über die Zwischenstellung in eine entgegengesetzt gespannte Konfiguration umkehrt.

Aus der US-A-3 480 986 ist ein Wischarm bekannt, der einen blattfederartig ausgebildeten Abschnitt aufweist und dessen Abklappmechanismus gelenkig verbundene Teile umfasst.

Es ist Aufgabe der Erfindung, einen Wischarm für eine Wischvorrichtung der eingangs genannten Art entsprechend der EP-A-0 299 708 anzugeben, welcher bei niedrige Bauhöhe einen anderen Abklappmechanismus aufweist.

### Vorteile der Erfindung

Bei dem erfindungsgemäßen Wischarm ist vorgesehen, dass der Abklappmechanismus durch den Abschnitt des Wischarms gebildet ist, der eine Kalotte umfasst. Der Einsatz derartiger Kalotten ist beispielsweise aus dem Gebiet der Thermoschalter bekannt. Dadurch, dass bei dem erfindungsgemäßen Wischarm für eine Wischvorrichtung vorgesehen ist, dass der Wischarm den blattfederartig ausgebildeten Abschnitt aufweist, kann die Bauhöhe deutlich reduziert werden. Durch den blattfederartigen Abschnitt kann ein an dem Wischarm zu befestigendes Wischblatt mit einem ausreichenden Druck an eine Scheibe angelegt werden, ohne dass separate Federelemente erforderlich sind, die die Bauhöhe vergrößern. Dadurch kann beispielsweise der Luftwiderstand verringert und eine bessere Wischqualität bei hohen Geschwindigkeiten erzielt werden. Weiterhin ergeben sich Vorteile hinsichtlich des Einbauraums. Der erfindungsgemäße Wischarm kann, insbesondere wenn er in Kombination mit einem so genannten Flachbalkenwischblatt verwendet wird, beispielsweise einfacher unter einer Motorhaube geparkt werden. Dies wirkt sich sowohl hinsichtlich des Luftwiderstandes als auch hinsichtlich der Ästhetik positiv aus.

Damit die aus dem Stand der Technik bekannte Abklappbarkeit des Wischarms beibehalten bleibt, weist der Wischarm einen Abklappmechanismus auf, mit dem der Wischarm zwischen einer Ruhestellung und einer Abklappstellung hin und her bewegbar ist. Obwohl Kupplungsvorrichtungen zur Verbindung des Wischarms und des Wischblatts denkbar sind, die einen Wechsel des Wischblatts auch ohne Abklappen des Wischarms ermöglichen, so dass die Abklappbarkeit nicht zwingend erforderlich ist, könnten Schäden verursacht werden, wenn ein nicht-abklappbarer Wischarm in gewohnter Weise von der Scheibe weggezogen wird.

Der Abklappmechanismus ist derart ausgelegt, dass der Wischarm über eine instabile Zwischenstellung zwischen der Ruhestellung und der Abklappstellung hin und her bewegbar ist. Unter der Ruhestellung wird in diesem Zusammenhang die Stellung des Wischarms verstanden, die er im nicht-abgeklappten Zustand einnehmen würde, wenn durch die Scheibe kein Gegendruck ausgeübt würde. Insofern kann die Ruhestellung auch als Anlieferstellung bezeichnet werden. Insbesondere umfasst der Abklappmechanismus keine gelenkig verbundenen Teile, da diese die Bauhöhe wieder vergrößern würden.

Bei dem erfindungsgemäßen Wischarm ist vorzugsweise weiterhin vorgesehen, dass der Wischarm in eine Arbeitsstellung bewegbar ist, die zwischen der instabilen Zwischenstellung und der Ruhestellung vorgesehen ist. Diese Arbeitsstellung wird in der Praxis durch ein an der Scheibe anliegendes Wischblatt festgelegt, wobei durch den blattfederartigen Abschnitt sichergestellt wird, dass das Wischblatt mit einem ausreichenden Druck gegen die Scheibe gedrückt wird.

Obwohl dies nicht zwingend erforderlich ist, können Auslösemittel vorgesehen sein, die die Kalotte elastisch verformen, um den Wischarm in eine vorgegebene Stellung zu bringen. Die vorgegebene Stellung kann dabei beispielsweise die Abklappstellung sein.

Zur Verwirklichung der Auslösemittel kann beispielsweise vorgesehen sein, dass die Auslösemittel durch einen Bügel gebildet sind, dass der Bügel ein erstes Ende aufweist, das an dem Wischarm befestigt ist, und dass der Bügel ein zweites Ende aufweist, das frei und benachbart zur Oberfläche der Kalotte angeordnet ist, wenn das Auslösemittel nicht aktiv ist. Wird der Wischarm von der Scheibe weggezogen, so verformt sich der Wischarm derart, dass das zweite Ende des Bügels eine Kraft auf die Kalotte ausübt, so dass der Wischarm beispielsweise in die stabile Abklappstellung gelangt.

Der erfindungsgemäße Wischarm weist vorzugsweise Mittel zur Befestigung eines Wischblattes auf.

Diese Mittel zur Befestigung eines Wischblattes können beispielsweise durch einen hakenförmig umgebogenen freien Endabschnitt des Wischarms gebildet sein, wie dies an sich bekannt ist. In diesem Fall ist es in der Regel erforderlich, den Wischarm in eine Abklappstellung zu bringen, wenn das Wischblatt gewechselt werden soll.

Insbesondere kann vorgesehen sein, dass die Mittel zur Befestigung eines Wischblattes eine Kupplungsvorrichtung umfassen, die dazu vorgesehen ist, mit einem an einem Wischblatt vorgesehenen Gegenstück der Kupplungsvorrichtung zusammenzuwirken. Die Kupplungsvorrichtung kann dabei derart ausgebildet sein, dass ein Lösen und Befestigen des Gegenstücks der Kupplungsvorrichtung in einer Arbeitsstellung des Wischarms möglich ist. Dies wäre beispielsweise möglich, wenn die Kupplungsvorrichtung und das Gegenstück der Kupplungsvorrichtung durch eine Linearbewegung, beispielsweise parallel zur Fahrzeugscheibe, verbindbar sind.

### Zeichnungen

Die Erfindung wird nachfolgend anhand der zugehörigen Zeichnungen noch näher erläutert.

Es zeigen:
- Figur 1: einen Wischarm gemäß einem Stand der Technik;
- Figur 2: einen weiteren nicht erfindungsgemäßen Wischarm, bei dem kein Abklappmechanismus vorgesehen ist, in einer Ruhestellung;
- Figur 3: den Wischarm gemäß Figur 2 in einer Arbeitsstellung;
- Figur 4: eine Draufsicht auf einen weiteren nicht erfindungsgemäßen Wischarm, in noch nicht fertiggestelltem Zustand;
- Figur 5: eine Draufsicht auf den Wischarm gemäß Figur 4 im fertiggestellten Zustand;
- Figur 6: eine Seitenansicht des Wischarms gemäß Figur 5 in einer Ruhestellung;
- Figur 7: eine Seitenansicht des Wischarms gemäß Figur 5 in einer Arbeitsstellung;
- Figur 8: eine Seitenansicht des Wischarms gemäß Figur 5 in einer Abklappstellung;
- Figur 9: eine Draufsicht auf einen erfindungsgemäßen Wischarm;
- Figur 10: die gegenseitige Lage eines Auslösemittels und einer Kalotte, in einer Arbeitsstellung des erfindungsgemäßen Wischarms;
- Figur 11: die Einwirkung der Auslösemittel von Figur 10 auf die Kalotte, in der Abklappstellung des Wischarms;
- Figur 12: eine Seitenansicht des Wischarms gemäß Figur 9 in einer Ruhestellung;
- Figur 13: eine Seitenansicht des Wischarms gemäß Figur 9 in einer Arbeitsstellung; und
- Figur 14: eine Seitenansicht des Wischarms gemäß Figur 9 in einer Abklappstellung.

### Beschreibung der Ausführungsbeispiele

Figur 2 zeigt eine einfache Ausführungsform eines nicht erfindungsgemäßen Wischarms 10 in seiner Anliefer- beziehungsweise Ruhestellung. Der Wischarm 10 weist einen blattfederartigen Abschnitt 11 auf, wobei sich der blattfederartige Abschnitt 11 gemäß der Darstellung von Figur 2 im entspannten Zustand befindet. Befestigungsmittel zur Befestigung eines Wischblatts sind in Form eines umgebogenen Endabschnitts 19 vorgesehen, wie dies an sich bekannt ist.

Figur 3 zeigt den Wischarm 10 in seiner Arbeitsstellung. In dieser Arbeitsstellung wird in der Praxis ein nicht dargestelltes Wischblatt gegen eine ebenfalls nicht dargestellte Scheibe gedrückt. Der durch die nicht dargestellte Scheibe verursachte Gegendruck ist durch die Kraft F veranschaulicht.

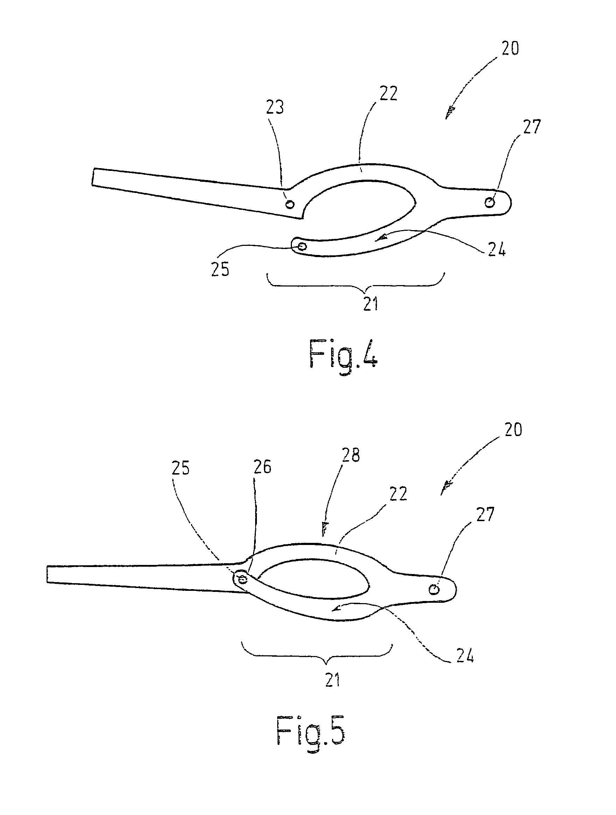

Figur 4 zeigt einen noch nicht fertiggestellten, nicht erfindungsgemäßen Wischarm, der insgesamt mit dem Bezugszeichen 20 versehen ist. Der Wischarm 20 weist einen ersten Schenkel 22 und einen zweiten Schenkel 24 auf. In der in Figur 4 dargestellten Ruhestellung des ersten Schenkels 22 und des zweiten Schenkels 24 sind diese in etwa U-förmig ausgerichtet. Der Wischarm 20 weist an einem seiner Endabschnitte einen Durchbruch 27 auf, der dazu vorgesehen ist, den Wischarm 20 mit nicht dargestellten Antriebsmitteln zu verbinden.

Im dargestellten Fall ist der blattfederartige Abschnitt 21 durch den ersten Schenkel 22 und/oder den zweiten Schenkel 24 gebildet. Ebenso wäre es jedoch denkbar, den blattfederartigen Abschnitt 21 benachbart zum ersten Schenkel 22 oder über die gesamte Länge des Wischarms 20 vorzusehen. Der erste Schenkel 22 weist einen Durchbruch 23 auf, während der zweite Schenkel 24 einen Durchbruch 25 aufweist.

Figur 5 zeigt eine Draufsicht auf den Wischarm 20 gemäß Figur 4 in einem fertiggestellten Zustand. Bei der Darstellung gemäß Figur 5 wurden der erste Schenkel 22 und der zweite Schenkel 24 unter Krafteinwirkung derart aufeinander zu vorgespannt, dass ein Element 26 durch die ausgerichteten Bohrungen 23 und 25 geführt werden konnte. Die derart gegeneinander vorgespannten ersten und zweiten Schenkel 22, 24 bilden einen insgesamt mit 28 bezeichneten Abklappmechanismus. Dieser Abklappmechanismus 28 ermöglicht es, dass der Wischarm 20 über eine instabile Zwischenstellung zwischen seiner Ruhestellung und seiner Abklappstellung hin und her bewegt werden kann.

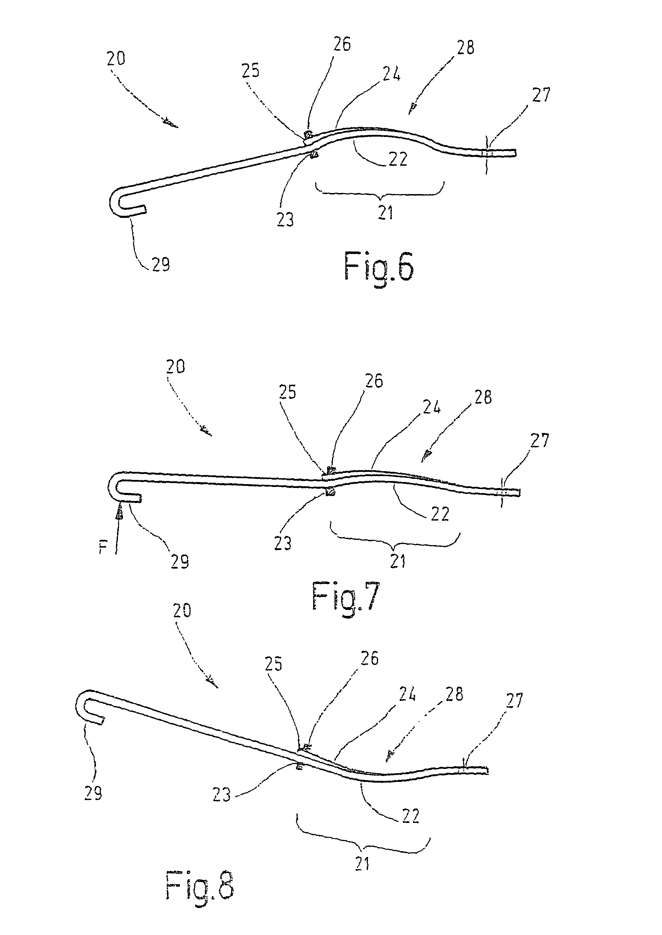

Figur 6 zeigt eine Seitenansicht des Wischarms 20 gemäß Figur 5, in seiner Ruhestellung, das heißt in einer Stellung, in der der blattfederartige Abschnitt 21 entspannt ist. Der Seitenansicht von Figur 6 ist weiterhin zu entnehmen, dass ein Endabschnitt 29 des Wischarms 20 umgebogen ist, um in bekannter Weise ein Wischblatt befestigen zu können.

Figur 7 zeigt eine Seitenansicht des Wischarms 20 gemäß Figur 5, in seiner Arbeitsstellung. In der Praxis wird in dieser Arbeitsstellung ein nicht dargestelltes Wischblatt gegen eine ebenfalls nicht dargestellte Scheibe gedrückt, wobei der durch die Scheibe ausgeübte Gegendruck durch die Kraft F veranschaulicht ist. Die Arbeitsstellung des Wischarms 20 liegt zwischen dessen Ruhestellung und der instabilen Zwischenstellung. Ein Vergleich der Darstellungen von Figur 7 und von Figur 1 zeigt deutlich, dass der für den nicht erfindungsgemäßen Wischarm 20 erforderliche Einbauraum deutlich kleiner als der gemäß dem Wischarm 1 der Figur 1 erforderliche Einbauraum ist. Dies wird zum einen durch den blattfederartigen Abschnitt 21 und zum anderen durch den ebenfalls flach ausgebildeten Abklappmechanismus 28 erreicht.

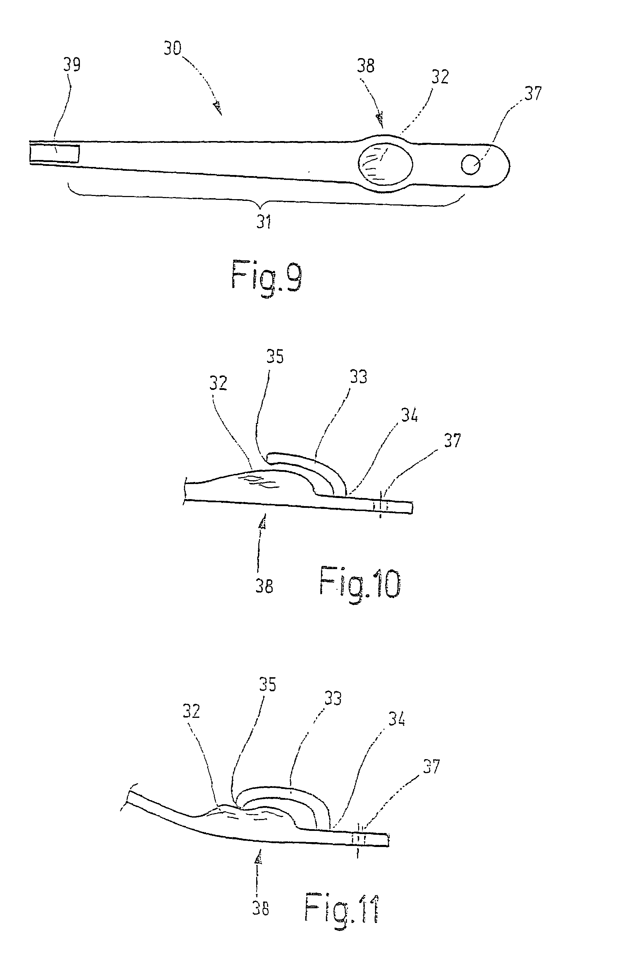

Figur 8 zeigt eine Seitenansicht des Wischarms 20 gemäß Figur 5 in seiner Abklappstellung. In der Praxis wird der Wischarm 20 in diese Abklappstellung bewegt, indem der Wischarm 20 von einer nicht dargestellten Scheibe abgehoben wird, beispielsweise um ein Wischblatt auszutauschen. Bei der in Figur 8 dargestellten Abklappstellung handelt es sich um eine stabile Stellung, die nach dem Überschreiten einer instabilen Zwischenstellung erreicht wird.

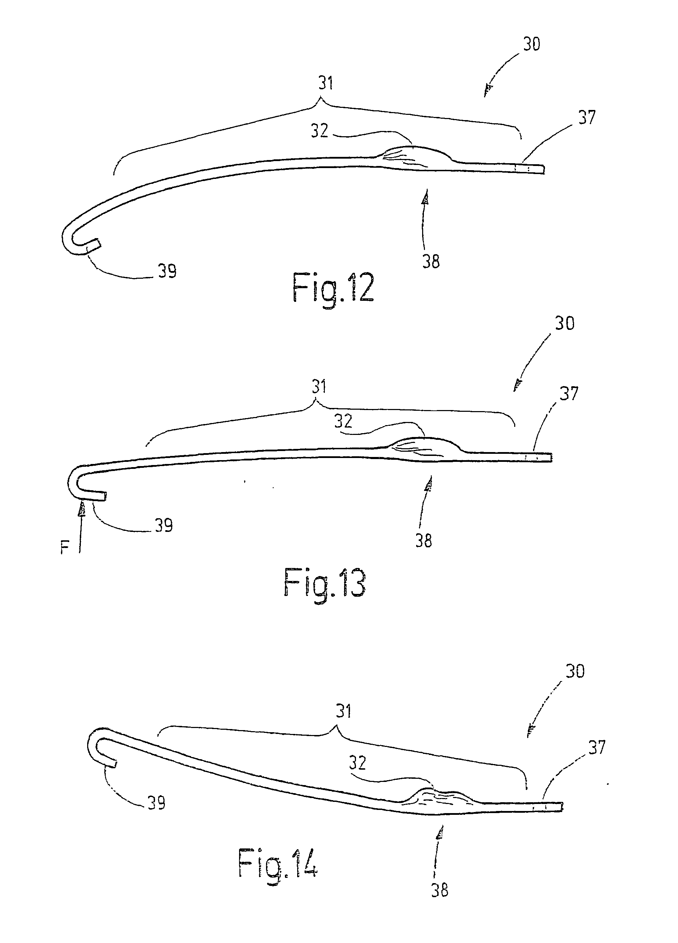

Figur 9 zeigt die Draufsicht auf einen erfindungsgemäßen Wischarm, der insgesamt mit dem Bezugszeichen 30 versehen ist. Der Wischarm 30 weist einen blattfederartigen Abschnitt 31 auf, der sich praktisch über die gesamte Länge des Wischarms 30 erstreckt. Ebenso ist es jedoch denkbar, den blattfederartigen Abschnitt 31 kürzer auszugestalten. Der Wischarm 30 weist einen hier nicht näher interessierenden Durchbruch 37 auf, der dazu vorgesehen ist, den Wischarm 30 mit nicht dargestellten Antriebsmitteln zu verbinden. Ferner weist der Wischarm 30 einen umgebogenen Endabschnitt 39 auf, an dem ein nicht dargestelltes Wischblatt befestigt werden kann. Bei dieser Ausführungsform weist der Wischarm 30 einen Abklappmechanismus 38 auf, der eine Kalotte 32 umfasst. Die Kalotte 32 trägt dazu bei, dass der Wischarm 30 über eine instabile zwischenstellung zwischen einer Ruhestellung und einer Abklappstellung hin und her bewegt werden kann, wie dies nachfolgend anhand der Figuren 12 bis 14 noch näher erläutert wird.

Figur 10 zeigt die gegenseitige Lage eines Auslösemittels und einer Kalotte 32, in einer Arbeitsstellung des Wischarms. Die Auslösemittel sind dabei durch einen Bügel 33 gebildet. Der Bügel 33 weist ein erstes Ende 34 auf, das an dem Wischarm befestigt ist. Der Bügel 33 weist ein zweites Ende 35 auf, das frei und benachbart zur Oberfläche der Kalotte angeordnet ist, wenn die Auslösemittel nicht aktiv sind.

Figur 11 zeigt die Einwirkung der Auslösemittel von Figur 10 auf die Kalotte 32, in der Abklappstellung des Wischarms. Bei der in Figur 11 dargestellten Abklappstellung des Wischarms hat das freie zweite Ende 35 des Bügels 33 derart zur Verformung der Kalotte 32 beigetragen, dass der Wischarm 30 sich in einer stabilen Abklappstellung befindet.

Es wird darauf hingewiesen, dass die Kalotte 32 auch ohne Auslösemittel eingesetzt werden kann.

Figur 12 zeigt eine Seitenansicht des Wischarms 30 gemäß Figur 9. Bei der in Figur 12 dargestellten Ruhestellung, die in der Praxis durch den Gegendruck einer Scheibe vermieden wird, befindet sich der blattfederartige Abschnitt 31 im entspannten Zustand. Weiterhin ist die Kalotte 32 in dieser Stellung nicht deformiert.

Figur 13 zeigt eine Seitenansicht des Wischarms 30 gemäß Figur 9 in seiner Arbeitsstellung. In dieser Arbeitsstellung wird in der Praxis ein nicht dargestelltes Wischblatt mit einem gewissen Druck an eine ebenfalls nicht dargestellte Scheibe angelegt. Der durch die nicht dargestellte Scheibe ausgeübte Gegendruck ist durch die Kraft F veranschaulicht. Auch bei dieser Ausführungsform befindet sich die Arbeitsstellung zwischen einer instabilen Zwischenstellung des Wischarms 30 und dessen Ruhestellung. Auch in der Arbeitsstellung ist die Kalotte 32 nicht oder nur unwesentlich deformiert. Ein Vergleich der Darstellungen von Figur 13 und Figur 1 zeigt, dass durch den erfindungsgemäßen Wischarm 30 mit Kalotte 32 eine deutlich niedrigere Bauhöhe als beim bekannten Wischarm 1 erzielt werden kann.

Figur 14 zeigt eine Seitenansicht des Wischarms 30 gemäß Figur 9 in seiner Abklappstellung. In der Abklappstellung ist die Kalotte 32 derart deformiert, dass sich eine stabile Stellung ergibt, aus der der Wischarm 30 nur mittels Krafteinwirkung wieder in Richtung auf die instabile Zwischenstellung und darüber hinweg bewegt werden kann.

Die vorhergehende Beschreibung des Ausführungsbeispiels gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen, vorausgesetzt, daß die Erfindung durch die Ansprüche bestimmt ist.

## Patentansprüche

1. Wischarm für eine Wischvorrichtung, insbesondere für eine Wischvorrichtung für eine Fahrzeugscheibe, der einen blattfederartig ausgebildeten Abschnitt (31) mit einem Abklappmechanismus (38) aufweist, mit dem der Wischarm zwischen einer Ruhestellung und einer Abklappstellung über eine instabile Zwischenstellung hin- und herbewegbar ist, **dadurch gekennzeichnet, dass** der Abklappmechanismus (38) durch den Abschnitt (31) des Wischarms (30) gebildet ist, der eine Kalotte (32) umfasst.

2. Wischarm nach Anspruch 1, **dadurch gekennzeichnet, dass** der Wischarm (30) in einer Arbeitsstellung bewegbar ist, die zwischen der instabilen Zwischenstellung und der Ruhestellung vorgesehen ist.

3. Wischarm nach einem der vorhergehenden Ansprüche, **dadurch gekennzeichnet, dass** Auslösemittel (33) vorgesehen sind, die die Kalotte (32) elastisch verformen, um den Wischarm (30) in eine vorgegebene Stellung zu bringen.

4. Wischarm nach einem der vorhergehenden Ansprüche, **dadurch gekennzeichnet, dass** die Auslösemittel durch einen Bügel (33) gebildet sind, dass der Bügel (33) ein erstes Ende (34) aufweist, dass an dem Wischarm (30) befestigt ist, und dass der Bügel (33) ein zweites Ende (35) aufweist, das frei und benachbart zur Oberfläche der Kalotte (32) angeordnet ist, wenn die Auslösemittel nicht aktiv sind.

5. Wischarm nach einem der vorhergehenden Ansprüche, **gekennzeichnet durch** Mittel (39) zur Befestigung eines Wischblattes.

6. Wischarm nach einem der vorhergehenden Ansprüche, **dadurch gekennzeichnet, dass** die Mittel zur Befestigung eines Wischblattes durch einen hakenförmig umgebogenen freien Endabschnitt (39) des Wischarms (30) gebildet sind.

7. Wischarm nach einem der vorhergehenden Ansprüche, **dadurch gekennzeichnet, dass** die Mittel zur Befestigung eines Wischplattes eine Kupplungsvorrichtung umfassen, die dazu vorgesehen ist, mit einem an einem Wischblatt vorgesehenen Gegenstück der Kupplungsvorrichtung zusammenzuwirken, wobei die Kupplungsvorrichtung derart ausgebildet ist, dass ein Lösen und Befestigen des Gegenstücks der Kupplungsvorrichtung in eine Arbeitsstellung des Wischarms (30) möglich ist.

## Claims

1. Wiper arm for a wiper device, in particular for a wiper device of a vehicle window, the wiper arm having a section (31) which is designed in the manner of a leaf spring and has a folding-down mechanism (38) with which the wiper arm can be moved to and fro between a rest position and a folded-down position via an unstable intermediate position, **characterized in that** the folding-down mechanism (38) is formed at that section (31) of the wiper arm (30) which comprises a dome (32).

2. Wiper arm according to Claim 1, **characterized in that** the wiper arm (30) is moveable in a working position which is provided between the unstable intermediate position and the rest position.

3. Wiper arm according to one of the preceding claims, **characterized in that** release means (33) are provided which elastically deform the dome (32) in order to bring the wiper arm (30) into a predetermined position.

4. Wiper arm according to one of the preceding claims, **characterized in that** the release means are formed by a clip (33)', **in that** the clip (33) has a first end (34) which is fastened to the wiper arm (30), and **in that** the clip (33) has a second end (35) which is arranged freely and adjacent to the surface of the dome (32) if the release means are not active.

5. wiper arm according to one of the preceding claims, **characterized by** means (39) for fastening a wiper blade.

6. Wiper arm according to one of the preceding claims, **characterized in that** the means for fastening a wiper blade are formed by a free end section (39) of the wiper arm (30) that is bent over in the shape of a hook.

7. Wiper arm according to one of the preceding claims, **characterized in that** the means for fastening a wiper blade comprise a coupling device which is provided to interact with a counterpart, which is provided on a wiper blade, of the coupling device, the coupling device being designed in such a manner that the counterpart of the coupling device can be released and fastened into a working position of the wiper arm (30) .

## Revendications

1. Bras d'essuie-glace pour un dispositif d'essuyage notamment un dispositif d'essuyage de vitre de véhicule comportant un segment (31) en forme de ressort lame muni d'un mécanisme de rabattement (38) grâce auquel le bras d'essuie-glace peut basculer entre une position de repos et une position rabattue en passant par une position intermédiaire instable,
**caractérisé en ce que**
le mécanisme de rabattement (38) est formé par le segment (31) du bras d'essuyage (30) qui comporte une calotte (32).

2. Bras d'essuie-glace selon la revendication 1,
**caractérisé en ce que**
le bras (30) est mobile dans une position de travail entre la position intermédiaire instable et la position de repos.

3. Bras d'essuie-glace selon l'une des revendications précédentes,
**caractérisé par**
des moyens de déclenchement (33) qui déforment élastiquement la calotte (32) pour mettre le bras d'essuie-glace (30) dans une position prédéterminée.

4. Bras d'essuie-glace selon l'une des revendications précédentes,
**caractérisé en ce que**
les moyens de déclenchement sont formés par un étrier (33) ayant une première extrémité (34) fixée au bras d'essuie-glace (30) et une seconde extrémité (35), libre, au voisinage de la surface de la calotte (32) lorsque les moyens de déclenchement ne sont pas activés.

5. Bras d'essuie-glace selon l'une des revendications précédentes,
**caractérisé par**
des moyens (39) pour fixer un balai d'essuie-glace.

6. Bras d'essuie-glace selon l'une des revendications précédentes,
**caractérisé en ce que**
les moyens de fixation d'un balai d'essuie-glace sont constitués par un segment d'extrémité (39) du bras d'essuie-glace (30), ce segment étant libre et recourbé en forme de crochet.

7. Bras d'essuie-glace selon l'une des revendications précédentes,
**caractérisé en ce que**
les moyens de fixation d'un balai d'essuie-glace comportent un dispositif de couplage coopérant avec une pièce complémentaire du dispositif d'accouplement, cette pièce étant prévue sur le balai d'essuie-glace, le dispositif de couplage permettant la libération et la fixation de la pièce complémentaire du dispositif de couplage lorsque le bras d'essuie-glace (30) est en position de travail.
